# EUROPÄISCHE PATENTSCHRIFT

(11) **EP 0 681 731 B1**
(45) Veröffentlichungstag und Bekanntmachung des Hinweises auf die Patenterteilung: **11.12.1996**
(21) Anmeldenummer: 94905087.6
(22) Anmeldetag: 19.01.1994
(51) Int. Cl.: G11B 7/09

(54) **ELIMINIEREN VON ABTASTSTÖRUNGEN**
ELIMINATION OF SCANNING DISTURBANCES
ELIMINATION DE PARASITES DE BALAYAGE

(30) Priorität: 23.01.1993 DE 4301827
(43) Veröffentlichungstag der Anmeldung: 15.11.1995
(73) Patentinhaber: DEUTSCHE THOMSON-BRANDT GMBH, 78048 Villingen-Schwenningen (DE)
(72) Erfinder: RICHTER, Hartmut, D-78052 Villingen-Schwenningen (DE); KÜHN, Hans-Robert, D-78112 St. Georgen (DE)
(86) Internationale Anmeldenummer: EP9400124
(87) Internationale Veröffentlichungsnummer: WO9417525

(56) Entgegenhaltungen:
- EP-A- 0 239 131
- GB-A- 2 137 746
- US-A- 4 706 235
- US-A- 5 113 378

## Beschreibung

Die Erfindung betrifft ein Verfahren und Anordnungen zur Spurnachführung und zum Eliminieren von Abtaststörungen optischer Informationsträger, wie beispielsweise CD, magnetooptische, phase change oder write once Platten.

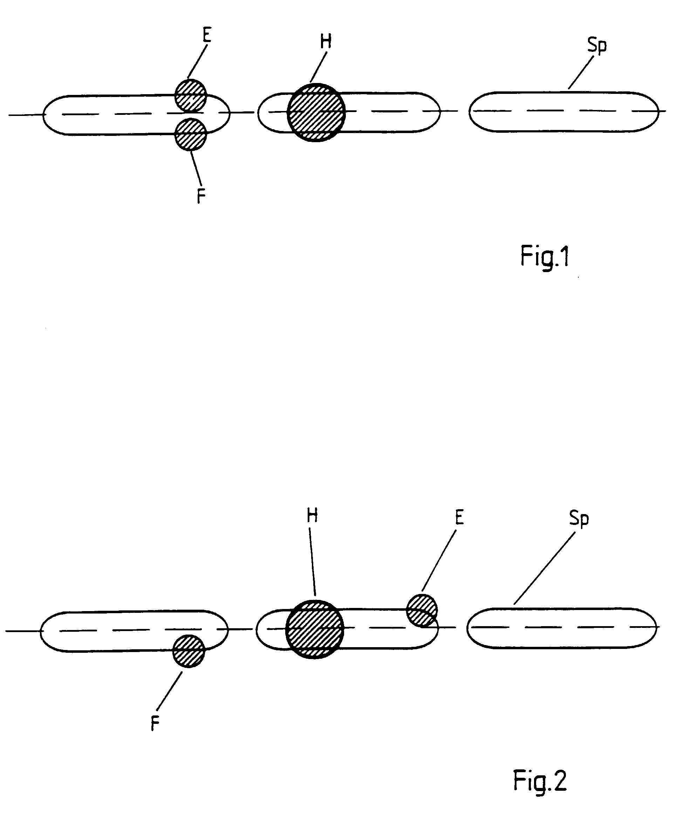

Zum Abtasten und insbesondere zum Führen eines Abtaststrahls auf einem optischen Informationsträger ist das sogenannte Mehrstrahl- oder Dreistrahlprinzip bekannt, vgl. KRIEG, Bernhard: Praxis der digitalen Audiotechnik in Franzis Arbeitsbuch, Franzis-Verlag GmbH, 1989, S. 45 ff. In tangentialer Richtung sind vor und nach einem Hauptlichtfleck zur Informationswiedergabe oder Informationsaufzeichnung jeweils ein Hilfslichtfleck zur Spurführung vorgesehen. Die Hilfslichtflecke sind in radialer Richtung jeweils zur Hälfte auf der Spur ausgerichtet (vgl. anliegende Fig.2) und dienen zum Erzeugen eines radialen Fehlersignals. Hierzu wird das vom Informationsträger reflektierte Licht jeweils separat mit einem Photodetekter detektiert. Aus den Intensitäten der reflektierten Lichtbündel der beiden Hilfslichtflecke bzw. Hilfsstrahlen wird dann durch Differenzbildung ein Spurfehlersignal gewonnen, wobei das erste Hilfssignal zeitlich um einen Betrag verzögert wird, der sich aus dem Abstand der Hilfslichtflecke und der Abtastgeschwindigkeit ergibt, vgl. Abspielgerät DA - 100 der Fa. Hitachi.
Nachteilig ist, daß detektierte Störsignale, die von Fehlern des Informationsträgers, wie beispielsweise Kratzer, Dropouts, Black Dots oder auch vom Informationsgehalt der Synchronisationssignale verursacht werden, durch Differenzbildung nicht vollständig eliminiert werden können, da die Signale bei zeitlicher Verzögerung je nach Signalcharakter hinsichtlich der Steilheit ihrer Signalflanken verfälscht werden. Weiterhin führt eine konstante Signalverzögerung bei unterschiedlichen Abtastgeschwindigkeiten oder Veränderungen des Abstandes der Hilfslichtflecke zum Hauptlichtfleck zu einem geringeren Auslöschen von Störsignalen, so daß im Radialservokreis Kräfte erzeugt werden, die zu einer Störung der Abtastung oder zum Spurverlust führen können.

Die Hilfslichtflecke und der Hauptlichtfleck auf der optischen Platte werden mit einem Laserstrahl durch Aufteilung mit einem Gitter in Strahlen 0-ter und +/- 1-ter Ordnung und Fokussierung mit einer Objektivlinse erzeugt. Der Strahl 0-ter Anordnung bildet dabei den Hauptlichtfleck und die Strahlen +/- erster Ordnung die Hilfslichtflecke. Die Ausbreitungsrichtungen der Licht- bzw. Laserstrahlen unterscheiden sich bei typischer Dimensionierung um weniger als ein Grad und die Brennpunkte werden mit einer Objektivlinse annähernd in der Informationsebene des Informationsträgers erzeugt. Eine hinreichende räumliche Trennung der Lichtflecke auf der optischen Platte entsprechend der Anordnung in Fig. 2 ist notwendig, um die Hilfslichtflecke einzeln detektieren und zur Spurnachführung vewenden zu können.
In in den Figuren wurden die Hilfslichtflecke E,F aus Gründen der besseren Unterscheidung zum Hauptlichtfleck H in unterschiedlicher Größe dargestellt, obwohl die Lichtflecke in der Regel gleich groß sind.

Zum Beseitigen von Störungen bei der Spurführung optischer Aufzeichnungsträger ist es bereits bekannt, Hilfsstrahlen zur Bildung eines Spurfolgefehlersignals durch Differenzbildung vorzusehen, vgl. GB 2 137 746. Es sind ausschließlich zwei Hilfsstrahlen auf einer Spur vorgesehen, die gleichzeitig zur Datensignalgewinnung verwendet werden sollen.

Aufgabe der Erfindung ist es, die Nachteile der Spurführung und des Eliminierens von Störungen durch Zeitverzögerung eines Hilfslichtflecksignals und anschließender Differenzbildung mit geringem Aufwand zu vermeiden.

Diese Aufgabe wird durch die in den Ansprüchen 1 und 2 angegebene Erfindung gelöst. Vorteilhafte Weiterbildungen sind in den Unteransprüchen angegeben.

Der Erfindung liegt das Prinzip zugrunde, daß bei einer nach dem Mehrstrahlprinzip arbeitenden Abtasteinrichtung Abtaststrahlen derart vorgesehen werden, daß die Hilfsstrahlen zur Spurführung auf dem abzutastenden Informationsträger als zwei auf dem Spurradius nebeneinander liegende Hilfsstrahlen auftreffen. Diese Hilfsstrahlen können dabei gemeinsam entweder vor oder nach dem Hauptlichtfleck auf dem Informationsträger auftreffend vorgesehen werden und dienen neben der bekannten Spurführung gleichzeitig zum vorteilhaften Eliminieren von Abtaststörungen. Eine Zeitverzögerung eines Hilfslichtflecksignals, die zu nachteiligen Signalveränderungen führt, ist nicht mehr erforderlich. Dies wird dadurch erreicht, daß die mit den Hilfsstrahlen detektierten Signale von radial nebeneinander angeordneten Hilfslichtflecken herrühren und dadurch unmittelbar eine Differenzbildung vorgenommen werden kann, so daß Störungen direkt ausgelöscht bzw. eliminiert werden. Die Hilfsstrahlsignale werden zur Spurfehlersignalbildung unmittelbar einer Differenzbildung unterzogen, wodurch die Nachteile des bekannten Mehrstrahlverfahrens vermieden werden. Zur Durchführung des Verfahrens ist im Strahlengang einer nach dem Mehrstrahlprinzip arbeitenden Abtasteinrichtung ein Strahlumlenkmittel vorgesehen, das beispielsweise aus einem geteilten Tangentialspiegel oder einem strahlablenkenden Gitter besteht, wobei derartige Anordnungen jedoch relativ große Abstände zwischen Strahlungsquelle und abzutastendem Informationsträger sowie besondere Maßnahmen zum Trennen der zu detektierenden Hilfsstrahlen und einen hohen mechanischen Aufwand erfordern.

Bevorzugt wird deshalb eine Anordnung, die im Strahlengang einen doppelbrechenden Kristall, wie beispielsweise ein Wollaston Prisma aufweist. Mit dem doppelbrechenden Kristall werden drei Abtaststrahlen, die von einem Laser mit einem Gitter erzeugt werden, hinsichtlich ihrer Anzahl verdoppelt. Die mit dem Wollaston Prisma erzeugten Strahlen weisen unterschiedliche Polarisationsrichtungen auf, so daß senkrecht zueinander polarisierte Hilfs- bzw. Nebenstrahlen längs der Spur in beliebig kleinem Abstand voneinander auf unterschiedlichen Seiten der Spur vorgesehen werden können . Die Hilfsstrahlen werden auf dem Spurradius vorzugsweise nebeneinander ausgerichtet und weisen eine unterschiedliche Polarisation auf, die zum Trennen der Abtastinformationen vorteilhaft ist. Durch die mit dem Strahlumlenkmittel auf dem Spurradius nebeneinander ausgerichteten Hilfsstrahlen, wirken sich unterschiedliche Abtastgeschwindigkeiten nicht mehr nachteilig auf das Ausblenden bzw. Eliminieren von Abtaststörungen aus und die Spurführung wird bezüglich Fehlerstellen und Exzentrizität des Informationstragers verbessert.

Nachfolgend wird die Erfindung anhand von Zeichnungen näher erläutert.
Es zeigen:
- Fig. 1: Prinzipskizze zur Abtaststrahlpositionierung,
- Fig. 2: Prinzipskizze zur Abtaststrahlpositionierung gemäß Stand der Technik,
- Fig. 3: Prinzipskizze zum Hilfssignalverlauf gemäß Stand der Technik,
- Fig. 4: Prinzipskizze zum Hilfssignalverlauf bei Hilfssignalverarbeitung mit Verzögerung,
- Fig. 5: Prinzipskizze zum Hilfssignalverlauf beim Eliminieren von Abtaststörungen,
- Fig. 6: Prinzipskizze einer Anordnung zum Eliminieren von Abtaststörungen,
- Fig. 7: Prinzipskizze eines berührungslos steuerbaren zweiteiligen Tangentialspiegels,
- Fig. 8: Hilfsstrahlablenkung eines zweiteiligen Tangentialspiegels mit manueller Winkelverstellung,
- Fig. 9: Prinzipskizze zur Abtaststrahlerzeugung mit einem doppelbrechenden Kristall,
- Fig. 10: Prinzipskizze einer Anordnung zur Abtaststrahlerzeugung,
- Fig. 11: Prinzipskizze einer Detektoranordnung und
- Fig. 12: Prinzipskizze zur Abtaststrahlanordnung mit einem doppelbrechenden Kristall.

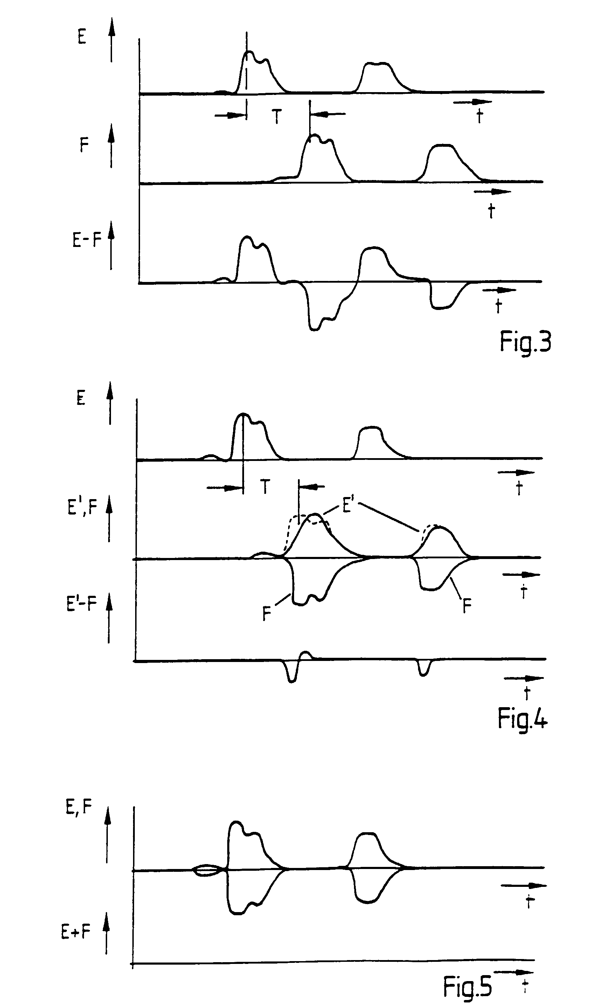

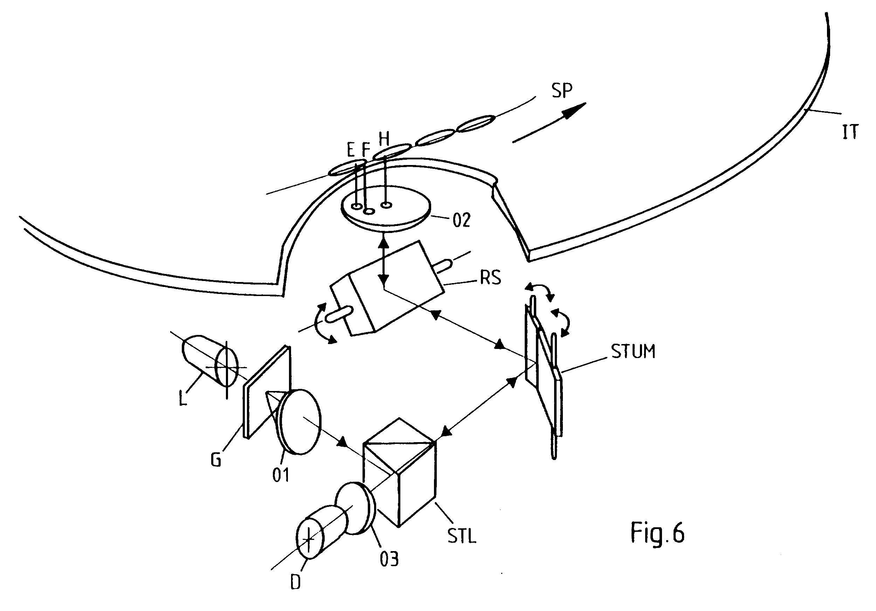

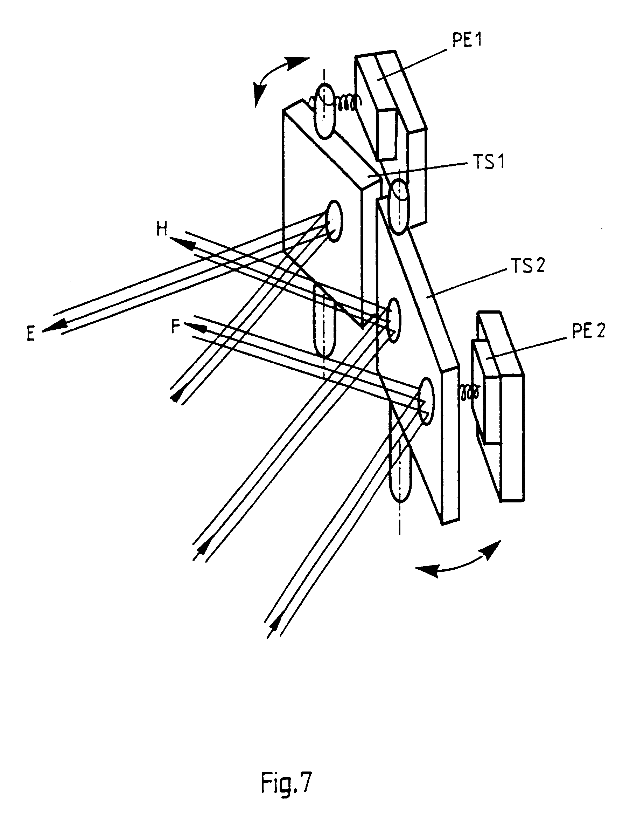

Fig.1 entsprechend sind zur Spurführung und zum Eliminieren von Abtaststörung zwei auf der Spur Sp eines Informationsträgers IT auf dem Spurradius nebeneinander angeordnete Hilfsstrahlen bzw. Hilfslichtflecke E,F und ein Hauptlichtfleck H vorgesehen. In dieser Ausführung sind die Hilfsstrahlen E,F bei einer von links nach rechts verlaufenden Spur hinter dem Hauptlichtfleck H angeordnet, wobei grundsätzlich auch eine Positionierung vor dem Hauptlichtfleck H möglich ist. In in den Figuren wurden die Hilfslichtflecke E,F aus Gründen der besseren Unterscheidung zum Hauptlichtfleck H in unterschiedlicher Größe dargestellt, obwohl die Lichtflecke in der Regel gleich groß sind.
Durch das Beeinflussen eines Laserstrahls derart, daß die Hilfsstrahlen E,F nebeneinander auf dem Spurradius der Spur Sp des Informationsträgers IT auftreffen, können sie nicht nur in bekannter Weise zur Spurführung sondern besonders vorteilhaft zum Eliminieren von Abtaststörungen verwendet werden. Das Eliminieren der Störungen erfolgt durch Differenzbildung detektierter Hilfsstrahlsignale, die von nebeneinander angeordneten Hilfsstrahlen E,F ausgehen. Da die Hilfsstrahlen E,F nebeneinander angeordnet sind, werden Störungen von beiden Hilfsstrahlen E,F gleichsam gleichzeitig detektiert, so daß Störungen durch die Differenzbildung der detektierten Hilfsstrahlsignale vollständig ausgeblendet bzw. eliminiert werden. Hierin bestehen die besonderen Vorteile des Verfahrens und der Anordnung gegenüber dem bekannten Dreistrahlprinzip, bei dem die Hilfsstrahlen E,F Fig.2 entsprechend in tangentialer Richtung vor und nach dem Hauptlichtfleck H zur Spur Sp versetzt vorgesehen sind.
Mit der bekannten Hilfsstrahlanordnung und bei Vorliegen einer beispielhaften Störung mit den Hilfsstrahlen E,F detektierte Hilfsstrahlsignale sind in Fig.3 dargestellt. Es ist zu erkennen, daß Störungen um eine Zeitdauer T, die von der Abtastgeschwindigkeit und dem Abstand der Hilfsstrahlen E,F abhängig ist, versetzt detektiert werden. Bei Differenzbildung der von den Hilfsstrahlen E,F ausgehenden Hilfsstrahlsignale bleibt das von der Störung ausgehende Störsignal im Spurfehlersignal erhalten. Zum Eliminieren von Abtaststörungen wurde deshalb bereits vorgeschlagen, das Hilfsstrahlsignal des voreilenden Hilfsstrahls E, vor der Differenzbildung um die Zeitdauer T zu verzögern. Das zeitlich versetzte Hilfsstrahlsignal E' des Hilfsstrahls E kann dann zum Eliminieren von Störungen durch Differenzbildung verwendet werden. Dies gelingt infolge auftretender Signalverformungen durch die zeitliche Verzögerung jedoch nur teilweise, wie das dritte Diagramm in Fig.4 veranschaulicht. Erst das Positionieren der Hilfsstrahlen E,F nebeneinander führt zu einer vollständigen Auslöschung bzw. zum Eliminieren der Störungen, wie dies in Fig.5 anschaulich dargestellt ist. Eine mit nebeneinander angeordneten Hilfsstrahlen E,F detektierte Störung führt bei entsprechend gewählter Polarität der Detektionsmittel zu spiegelbildlichen Hilfsstrahlsignalen, deren Addition ein vollständiges Auslöschen bzw. Eliminieren der Störung bewirkt.
Wie bereits erwähnt, wird zum Erreichen dieses Effektes ein Laserstrahl derart beeinflußt, daß er mit einem Strahlumlenkmittel STUM zwei auf einer Spur Sp des Informationsträgers nebeneinander angeordnete Hilfsstrahlen E,F und einen Hauptlichtfleck H erzeugt. Das Strahlumlenkmittel STUM kann gemäß einer ersten Ausführung, die in Fig. 6 dargestellt ist, von einem zweiteiligen Tangentialspiegel gebildet werden, der im Strahlengang einer nach dem Dreistrahlprinzip arbeitenden Abtasteinrichtung angeordnet ist. Um die Hilfslichtflecke E,F erfindungsgemäß nebeneinander auf der Spur Sp eines Informationstragers IT auszurichten und von den Hilfslichtflecken E,F ausgehende Hilfssignale zu detektieren, wird der von einem Laser L ausgehende Lichtstrahl mit einem Gitter G in Strahlen 0-ter und +/- 1-ter Ordnung aufgeteilt und durch eine erste Objektivlinse O1 hindurch auf einen Stahlteiler STL ausgerichtet, der den aufgeteilten Lichtstrahl auf den als Strahlumlenkmittel STUM verwendeten zweiteiligen Tangentialspiegel umlenkt. Mit dem zweiteiligen Tangentialspiegel werden die Brennpunkte bzw. die Hilfslichtflecke E,F und der Hauptlichtfleck H dann über einen Radialspiegel RS und durch eine zweite Objektivlinse O2 hindurch in der angegebenen Art auf dem Informationsträger IT ausgerichtet. Dabei wird ein Teilspiegel des zweiteiligen Tangentialspiegels insbesondere dazu verwendet, um einen der Hilfslichtflecke E,F neben dem anderen der Hilfslichtflecke E,F auf der Spur Sp des Informationsträgers IT auszurichten. Das vom Informationsträger IT reflektierte Licht wird dann wiederum durch die zweite Objektivlinse O2 hindurch über den Radialspiegel RS, den als Strahlumlenkmittel STUM verwendeten Tangentialspiegel und durch den Strahlteiler STL und eine dritte Objektivlinse O3 hindurch einem Detektor D zugeführt, der zur Detektion von Hilfsstrahl- und Hauptstrahlsignalen aus einzelnen Photoelementen besteht. Die beiden nebeneinander liegenden Hilfslichtflecke können jedoch auf dem Rückweg vom Informationsträger IT zum Detektor D nicht mehr vom Tangentialspiegel getrennt werden. Als Gitter G ist deshalb ein modifiziertes Wollaston-Prisma zu verwenden, mit dem aus einem Laserstrahl ein cirkular polarisierter Hauptstrahl und zwei senkrecht zueinander polarisierte Hilfsstrahlen gebildet werden. Diese Polarisation ermöglicht dann die raümliche Trennung der Hilfslichtflecke auf dem Rückweg.
Der zweiteilige Tangentialspiegel besteht Fig. 7 entsprechend aus einem ersten Teilspiegel TS1 und einem zweiten Teilspiegel TS2, wobei ein erstes und ein zweites Piezoelement PE1, PE2 zum Ausrichten der Teilspiegel TS1, TS2 vorgesehen sind, um sie unabhängig voneinander steuern zu können.

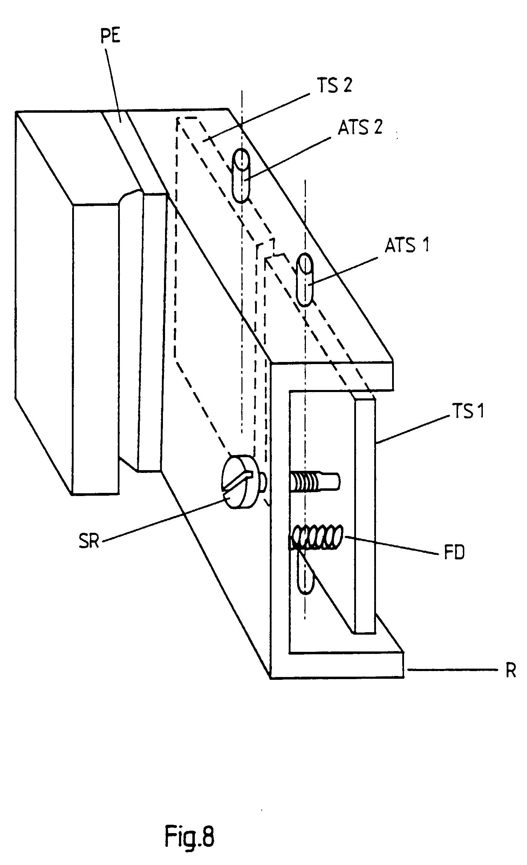

Fig. 8 entsprechend können die Teilspiegel TS1,TS2 auch jeweils um eine Achse ATS1 bzw. ATS2 schwenkbar in einem Rahmen R angeordnet werden, wobei dann ein Teilspiegel TS1 mittels einer Schraube SR und einer Rückhaltefeder FD mechanisch relativ zum anderen Teilspiegel TS2 justiert und der Rahmen R mit einem Piezoelement PE zur gemeinsamen dynamischen tangentialen Nachsteuerung ausgerichtet werden.
Gemäß einer nicht dargestellten Ausführung können zur Strahlablenkung auch strahlablenkende Beugungsgitter verwendet werden, die im Strahlengang angeordnet oder in mindestens einem Umlenkspiegel integriert sind.

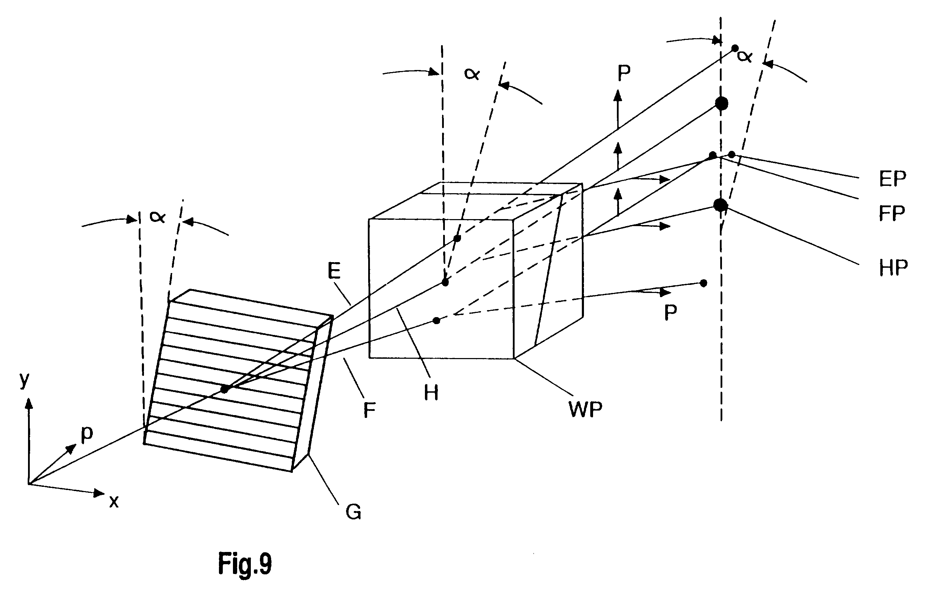

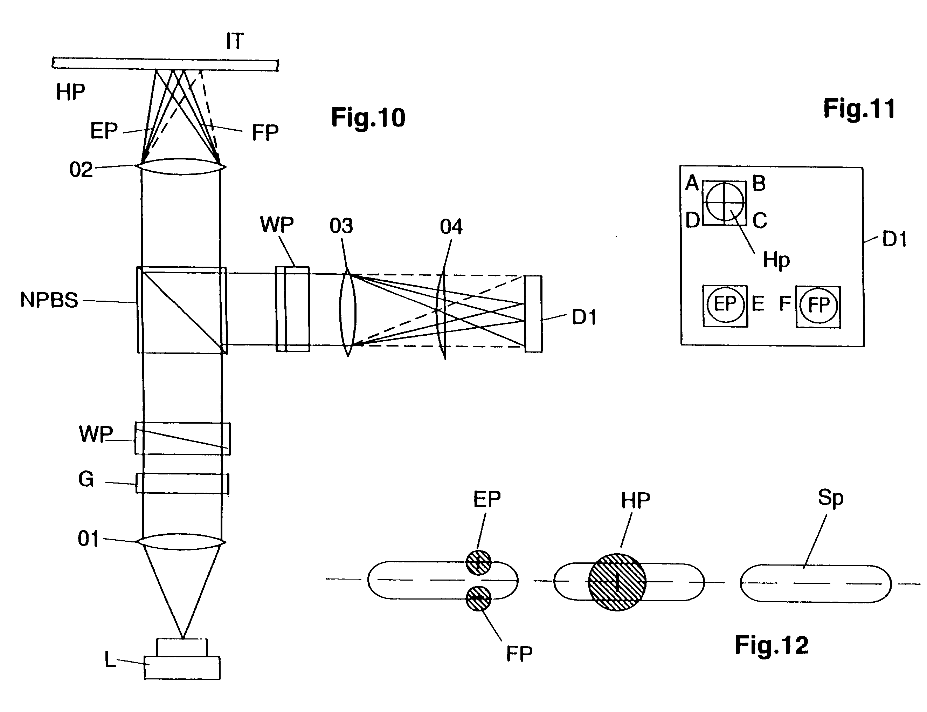

Als besonders vorteilhaft erweist sich jedoch eine Ausführung gemäß Fig. 10, bei der im Strahlengang ein doppelbrechender Kristall, wie beispielsweise ein Wollaston Prisma WP verwendet wird. Das Prinzip zum Erzeugen auf der Spur Sp unmittelbar nebeneinander angeordneter Hilfslichtflecke E und F bzw. EP und FP wird anhand von Fig. 9 erläutert. Ausgangspunkt der Abtaststrahlerzeugung bildet ein Laserstrahl, der zur Veranschaulichung seinen Ursprung in der Mitte eines Koordinatensystems xy haben soll und eine Polarisationsrichtung P aufweist.

Dieser Laserstrahl trifft dann auf ein Gitter G, das um einen Winkel α zur Koordinatenachse y gedreht ist. Mit dem Gitter G werden in bekannter Weise ein Hauptstrahl 0-ter Ordnung und 2 Hilfsstrahlen +/- 1-ter Ordnung erzeugt. Diese Strahlen werden dann durch einen doppelbrechenden Kristall, der vorzugsweise ein Wollastan Prisma WP ist, geführt und auf dem Weg durch das Wollaston Prisma WP sowohl hinsichtlich ihrer Anzahl verdoppelt als auch bezüglich ihrer Polarisationsrichtung P beeinflußt. Zwei von einem mit dem Wollaston Prisma WP erzeugte Strahlen weisen dabei senkrecht aufeinander stehende
Polarisationsrichtungen P auf. Weiterhin werden mit dem Wollaston Prisma WP zwei auf einer Spur Sp nebeneinander angeordnete Hilfslichtflecke EP, FP erzeugt. Diese Hilfslichtflecke EP, FP sind von Hilfsstrahlen E, F abgeleitet und weisen zueinander eine senkrechte Polarisation P auf. Auch vom Hauptstrahl H werden mit dem Wollaston Prisma WP zwei Hauptflecke gebildet, von denen im Zusammenhang mit der Informationsabtastung jedoch nur ein Hauptlichtfleck HP verwendet wird. Analog verhält es sich mit den weiteren Hilfslichtflecken, die nur aus Gründen der Vollständigkeit angegeben sind. Die senkrecht zueinander polarisierten Hilfsstrahlen EP, FP können entlang der Spur Sp in beliebig kleinem Abstand voneinander auf verschiedenen Seiten der Spur Sp angeordnet werden. Für die räumliche Trennung der Hilfsstrahlen EP, FP werden ihre unterschiedlichen Polarisationsrichtungen P ausgenutzt. Zur polarisationsempfindlichen Trennung der Hilfstrahlen EP, FP sowie für den Nachweis des Informationssignals wird vorzugsweise ein doppelbrechender Kristall verwendet, wobei der gleiche Effekt jedoch auch mit polarisationsempfindlichen dielektrischen Schichten erreicht werden kann. Das anhand von Fig. 9 erläuterte Prinzip der Bildung zweier Hilfslichtflecke EP, FP, die nebeneinander auf dem Radius einer Spur Sp eines Informationsträgers IT angeordnet sind, wird mit einer in Fig. 10 dargestellten Anordnung realisiert. Wie in Fig. 10 dargestellt, wird das Licht eines Lasers L über eine Objektivlinse O1, ein Gitter G, ein Wollaston Prisma WP, einen Strahlteiler NPBS und eine Objektivlinse O2 zu einem Informationsträger IT geführt, um dort insbesondere einen Hauptlichtfleck HP zur Informationsabtastung und zwei nebeneinander angeordnete Hilfslichtflecke EP, FP zu bilden. Das vom Informationsträger reflektierte Licht wird dann über Objektivlinse O2, den Strahlteiler NPBS, ein weiteres Wollaston Prisma WP, eine Objektivlinse 03 und eine Zylinderlinse 04, einen Photodetektor D1 zugeführt. Während das Wollaston Prisma WP im Strahlengang zwischen der Laserdiode L und dem Informationsträger IT insbesondere verwendet wird, um die Hilfslichtflecke EP, FP nebeneinander anzuordnen, ist das Wollaston Prisma WP im Strahlengang zwischen dem Strahlteiler NPBS und dem Photodetektor D1 vorgesehen, um eine räumliche Trennung des polarisierten Lichtes vorzunehmen. Der Strahlteiler NPBS ist ein nichtpolarisierter Strahlteiler mit einem Teilverhältnis von 50% zu 50% und das Wollaston Prisma WP im Strahlengang zwischen der Laserdiode L und dem Informationsträger IT dient als Strahlumlenkmittel STUM. Die auf dem Informationstrager IT gebildeten Hilfslichtflecke EP, FP und der Hauptlichtfleck HP, die in Fig. 12 dargestellt sind, werden mit dem Photodetektor P1 detektiert. Der Photodetektor D1 enthält einen Vierquadranten Detektor ABCD zur Detektion des Hauptlichtfleckes HP sowie zwei weitere Detektionsflächen zum Detektieren der Hilfslichtflecke EP, FP bzw. E und F, wie in Fig. 11 angegeben. Die mit dem Photodektor D1 von den Hilfslichtflecken EP, FP detektierten Signale können dann zum Bilden eines Spurfehlersignals unmittelbar eine Differenzbildung unterzogen werden, wodurch die bereits genannten Vorteile bei der Spurführung und Störsignalausblendung erreicht werden. Die Polarisation des Hauptlichtfleckes HP ist von untergeordneter Bedeutung und kann in Abhängigkeit vom zur Informationsabtastung ausgewählten Strahl in Richtung der Spur Sp oder senkrecht zur Spur Sp gewählt werden. Vorteilhaft ist jedoch die in Fig. 12 angedeutete Polarisationsrichtung senkrecht zur Spur Sp.

## Patentansprüche

1. Verfahren zum Abtasten eines optischen Informationsträgers, wie beispielsweise einer CD, mit einer nach dem Dreistrahlprinzip arbeitenden Abtasteinrichtung, die ein strahlaufteilendes Gitter, Linsen und Strahlumlenkmittel sowie ein Mittel zur Differenzbildung von Hilfslichtflecksignalen enthält, **dadurch gekennzeichnet**, daß mit einem Strahlumlenkmittel (STUM) auf dem Radius einer Spur (Sp) des Informationsträgers (IT) Hilfsstrahlen (E,F) zur Blidung eines Spurfolgefehlersignals durch Differenzbildung zum Beseitigen, von Störungen bei der Spurführung nebeneinander auf einer Spur (Sp) vor oder nach dem Hauptlichtfleck (H) auftreffend vorgesehen werden und Störungen durch Differenzbildung von den reflektierten hilfsstrahlen (E,F) mittels Detektoren gebildeter Hilfslichtflecksignale eliminiert werden.

2. Anordnung zur Durchführung des Verfahrens nach Anspruch 1, **dadurch gekennzeichnet**, daß im Strahlengang einer nach dem Dreistrahlprinzip arbeitenden Abtasteinrichtung zum Erzeugen auf dem Radius einer Spur (Sp) eines Informationsträgers (IT) vor oder nach dem Hauptlichtfleck (H) nebeneinander auftreffender Hilfsstrahlen (E, F) ein Strahlumlenkmittel (STUM) angeordnet ist und Mittel zum Detektieren von den reflektierten Hilfsstrahlen (E, F) gebildeter Hilfslichtflecksignale sowie Mittel zur Differenzbildung der Hilfslichtflecksignale zum Beseitigen von Störungen vorgesehen sind.

3. Anordnung nach Anspruch 2, **dadurch gekennzeichnet,** daß das Strahlumlenkmittel (STUM) ein geteilter Tangentialspiegel ist.

4. Anordnung nach Anspruch 2, **dadurch gekennzeichnet,** daß das Strahlumlenkmittel (STUM) ein strahlablenkendes Beugungsgitter ist.

5. Anordnung nach Anspruch 2, **dadurch gekennzeichnet,** daß das Strahlumlenkmittel (STUM) ein doppelbrechender Kristall ist.

6. Anordnung nach Anspruch 5, **dadurch gekennzeichnet,** daß das Strahlumlenkmittel (STUM) ein Wollaston Prisma (WP) ist.

7. Anordnung nach Anspruch 2, **dadurch gekennzeichnet,** daß das Strahlumlenkmittel (STUM) eine polarisationsempfindliche dielektrische Schicht ist.

## Claims

1. Process for the scanning of an optical information carrier, such as for example a CD, having a scanning device which operates in accordance with the three-beam principle and which includes a beam-splitting grating, lenses and beam deflection means as well as a means for the difference formation of auxiliary light spot signals, characterized in that using a beam deflection means (STUM) auxiliary beams (E, F) are provided on the radius of a track (Sp) of the information carrier (IT), impinging side by side on a track (Sp) ahead of or behind the main light spot (H), for the formation of a tracking error signal by difference formation to overcome disturbances in tracking, and disturbances are eliminated by difference formation of auxiliary light spot signals formed from the reflected auxiliary beams (E, F) by means of detectors.

2. Arrangement for carrying out the process according to claim 1, characterized in that a beam deflection means (STUM) is disposed in the beam path of a scanning device operating in accordance with the three-beam principle, for the generation on the radius of a track (Sp) of an information carrier (IT) of auxiliary beams (E, F) impinging side by side ahead of or behind the main light spot (H), and means for the detection of auxiliary light spot signals formed from the reflected auxiliary beams (E, F) as well as means for the difference formation of the auxiliary light spot signals to overcome disturbances are provided.

3. Arrangement according to claim 2, characterized in that the beam deflection means (STUM) is a divided tangential mirror.

4. Arrangement according to claim 2, characterized in that the beam deflection means (STUM) is a beam-deflecting diffraction grating.

5. Arrangement according to claim 2, characterized in that the beam deflection means (STUM) is a birefringent crystal.

6. Arrangement according to claim 5, characterized in that the beam deflection means (STUM) is a Wollaston prism (WP).

7. Arrangement according to claim 2, characterized in that the beam deflection means (STUM) is a polarization-sensitive dielectric layer.

## Revendications

1. Procédé pour la lecture d'un support d'informations optique, tel un CD, au moyen d'un dispositif de lecture fonctionnant selon le principe à triple faisceau et comportant un réseau séparateur de faisceau, des lentilles et des moyens de réflexion de faisceau, ainsi qu'un moyen pour la formation de la différence des signaux de spots auxiliaires, procédé **caractérisé en ce que**, grâce à un moyen de réflexion de faisceau (STUM), des faisceaux auxiliaires (E, F) sont projetés sur le rayon d'une piste (Sp) du support d'informations (IT) afin de générer un signal d'erreur de poursuite par formation de la différence pour supprimer les interférences lors de la poursuite de la piste, sachant que lesdits faisceaux auxiliaires arrivent sur la piste (Sp) l'un à côté de l'autre et en amont ou en aval du spot principal (H), et sachant en outre que les interférences sont éliminées par formation de la différence des signaux spots auxiliaires produits par les faisceaux auxiliaires réfléchis (E, F) grâce à des détecteurs.

2. Dispositif pour la réalisation du procédé selon la revendication 1 **caractérisé en ce qu'**un moyen de réflexion de faisceau (STUM) est disposé dans le trajet du faisceau d'un dispositif de lecture fonctionnant selon le principe à triple faisceau pour générer des faisceaux auxiliaires (E, F) tombant l'un à côté de l'autre et an amont ou en aval du spot principal (H) sur le rayon d'une piste (Sp) d'un support d'informations (IT), et sachant qu'il existe en outre des moyens pour détecter les signaux des spots auxiliaires produits par les faisceaux auxiliaires réfléchis (E, F), ainsi que des moyens pour former la différence desdits signaux de spots auxiliaires pour supprimer les interférences.

3. Dispositif selon la revendication 2 **caractérisé en ce que** ledit moyen de réflexion de faisceau (STUM) est un miroir tangentiel divisé.

4. Dispositif selon la revendication 2 **caractérisé en ce que** ledit moyen de réflexion de faisceaux (STUM) est un réseau de diffraction réflecteur de faisceau.

5. Dispositif selon la revendication 2 **caractérisé en ce que** ledit moyen de réflexion de faisceaux (STUM) est un cristal biréfringent.

6. Dispositif selon la revendication 5 **caractérisé en ce que** ledit moyen de réflexion de faisceaux (STUM) est un prisme de Wollaston (WP).

7. Dispositif selon la revendication 2 **caractérisé en ce que** ledit moyen de réflexion de faisceaux (STUM) est une couche diélectrique sensible à la polarisation.
